Europäisches Patentamt

European Patent Office

Office européen des brevets

(19)

(11) **EP 1 600 211 A1**

(12) **EUROPEAN PATENT APPLICATION**

(43) Date of publication:
**30.11.2005 Bulletin 2005/48**

(51) Int Cl.[7]: **B01J 20/26**, B01J 20/28

(21) Application number: **05252979.9**

(22) Date of filing: **14.05.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **25.05.2004 US 574313 P**

(71) Applicant: **ROHM AND HAAS COMPANY
Philadelphia, Pennsylvania 19106-2399 (US)**

(72) Inventors:
• **Fisher, Richard Jon
Perkasie, PA 18944 (US)**

• **Kinzey, Malin Kenneth
Philadelphia, PA 19147 (US)**
• **Maikner, John Joseph
Zionsville, PA 18092 (US)**

(74) Representative: **Buckley, Guy Julian et al
ROHM AND HAAS (UK) LTD.,
European Operations Patent Department
28th Floor, City Point,
One Ropemaker Street
London EC2Y 9HS (GB)**

(54) **Drying method for macroporous polymers, and method of preparation and use of macroporous polymers made using the method**

(57)     The invention provides for drying methods for macroporous polymers that provide improved performance characteristics. The polymers are easy to pack and especially useful in large scale chromatography columns.

EP 1 600 211 A1

**Description**

**BACKGROUND OF THE INVENTION**

This invention relates to drying methods that create novel macroporous polymers having selected porosity and permeability characteristics that provide rigid, high performance polymer packings suitable for use in medium and high pressure reversed phase liquid chromatography (RPC). The polymers disclosed herein made using the drying methods described herein are especially useful in the chromatographic separation and polishing of biomolecules such as insulin and insulin-like compounds.

The polymeric resins made using the present invention overcome key drawbacks of the current art. A drawback of the art is that the packing effciencies of polymeric resins are typically lower than those of reversed phase silica packings. To be very useful for polishing of biomolecules, polymeric packings should be able to be packed into chromatographic columns to levels which are as high or higher than reversed phase silica packings. In addition, the pore diameter of the packing must be adequate to allow diffusion of the biomolecule into and out of the material without restriction. Pores and internal poor structure deteriorate using drying techniques that use mechanical pressure to separate beads.

The particle size of packings useful for large scale processing must be sufficiently small to enable the recovery of highly purified product from the mixture, at the highest possible yield, and in a minimum of cycle time. However, the particle size must not be so small that extreme pressure drops are generated in the chromatography column. Particle sizes which meet these requirements in RPC production chromatography are typically in the range of 5 to 50 microns, most typically in the range of 10 to 20 microns.

Importantly, to be useful under conditions experienced in the production process, RPC packings must be mechanically rigid to withstand the high operating pressures generated within the chromatography columns, that is, those typically having internal diameters of 2 to 100 centimeters. The columns are commonly operated at pressures from 20 to 100 bar, the high backpressures owing to the combination of small particle size, high flowrate, and viscous organic solvents used in the chromatographic process. In industrial high pressure liquid chromatography, it is common to use columns that are equipped with a piston that exerts a dynamic force directly onto the resin. It is preferred to keep the piston active in exerting a force (pressure) that is equal to or greater than the hydrodynamic pressure in the chromatographic column. By way of example, Dynamic Axial Compression (DAC) columns made by Novasep (commercially available from Novasep, BP-50 54340 Pompey, France) are used in large scale HPLC processes.

Chromatographic packings based on synthetic polymers are chemically impervious to strongly alkaline conditions. These materials typically can be operated over a very wide range of pH conditions, providing greater utility than silica-based materials in biomolecule separations. Polymeric resins can be cleaned aggressively using a high-pH solution, thus improving the column lifetime and, consequently, the economics of the overall biopharmaceutical manufacturing process. In addition, because it is possible to use a high-pH mobile phase with polymeric packings in a way that it is not possible to do so with silica-based packings, the development scientist has more tools to work with in the design of an efficient biopharmaceutical manfacturing process. Certain molecules may have improved solubility under high pH conditions, and the column loadability and chromatographic selectivity in the process may be improved as well.

However, a drawback of exisiting polymeric materials is that they do not simultaneously have the combination of excellent chromatographic performance and pressure stability offered by state-of-the-art RPC silica gels. "Excellent chromatographic performance" is referred to here as the attainment of high yield-purity, with high throughput, in a minimum cycle time. "Pressure stability" refers to the ability of the packing to resist significant deformation under the high pressure conditions encountered in the process. If the gel particles deform significantly, the void volume of the packed bed (and hence the media permeability) decreases, causing a backpressure increase and a reduction of the allowable solvent flowrate through the column. This causes a reduction of cycle time and throughput in the process.

Chromatographic performance for end-polishing of compounds such as insulin is often described or visualized as a tetrahedron, with the four apexes representing high yield, high purity, fast cycle time, and high throughput. (Throughput is a combination of yield, column loading, and cycle time.) The problem addressed by the present invention is a to provide a polymeric resin which achieves chromatographic performance in end-polishing steps by meeting the four criteria described above, while simlutaneously demonstrating an abiltiy to resist significant deformation when exposed to pressures up to 100 bar.

The problem addressed by the present invention is to provide a macroporous, polymeric material that is easily packed. This material and the columns in which the material is packed are suitable for chromatography and end-polishing of biomolecules, e.g. such as insulin and insulin-like compounds.

The present invention provides an improved method of making a plurality of macroporous chromatographic resin beads. The improvement involves removing a solvent from around the beads in a manner not to disturb the internal pore structure of the beads. Conventional drying techniques result in damage to the internal pore structure of the beads thus resulting in poor performance and poor packing of the beads in columns. The invention solves this problem by rapidly removing solvents such as water in which beads are contained. In practice, a plurality of beads are surrounded by solvent, e.g. water and atomized such that the plurality of beads are contained in a water droplet. The beads within the water droplet are then subjected to rapid drying conditions such that the water surrounding the beads is flashed off, in one variant of the invention. This water can be flashed off in less than about one second. The beads are then freed from the water droplet without having their internal pore structure damaged. By contrast, as shown in the examples below, beads drying using conventional drying techniques cake and must be subjected to mechanical agitation or other mechanical techniques to free the beads from the resulting cake. This mechanical agitation also results in bead pore structure damage.

In one variant of the invention the solvent comprises water. In this variant, the water (or other solvent) is flash dried off the beads. Flash drying imparts improved performance characteristics as shown in Table 6 and as discussed below.

In yet another variant, the step of removing comprises microwave drying the beads. Microwaves are provided to the beads so that the solvent is rapidly removed from the beads without damaging the internal pore structure of the beads or the surface of the beads. In yet another variant, the step of removing comprises freeze drying the beads. The freeze drying of the beads serves to rapidly remove the solvent such that the pore structure of the beads is not damaged.

It is appreciated that the invention provides a macroporous bead made using a method which utilizes the step of removing a solvent from around the beads in a manner not to disturb the internal pore structure of the beads.

There are many uses for these types of beads. One examplary use involves chromatography. By way of example, the improved method of chromatography comprises using a plurality of macroporous beads made using a process which utilizes the step of removing a solvent from around said beads in a manner not to disturb the internal pore structure of the beads. The step of removing is selected from the group consisting of flashing off a solvent, freeze drying off a solvent and microwaving off a solvent. It is appreciated that other methods of flashing of the solvent, e.g. water can also be used in addition to the exmaples provided herein.

In another aspect, the invention provides a biomolecule or pharmacuetical separated from other compounds using the method of chromatography described herein

Examples of macroporous polymers that can be dried using the present invention include polymers comprising polymerized monomer units of: 50 to 100 percent by weight of one or more polyvinylaromatic monomer, and zero to 50 percent by weight of one or more monounsaturated vinylaromatic monomer. The polymer has, in one variant of the invention: (i) a total porosity of 0.7 to 2 cubic centimeter per gram; (ii) an operational mesoporosity of 0.7 to 1.9 cubic centimeter per gram; (iii) an average particle size diameter of 5 to 50 microns; (iv) a surface area of 200 to 1500 square meters per gram; (v) a flow resistance value less than 2,000 at a pressure of 100 bar; (vi) a total insulin capacity of 60 to 150 grams insulin/liter of polymer and a dynamic insulin capacity of 50 to 150 grams insulin/liter of polymer. Where the polymer is used to process a biomolecule such as insulin or an insulin like molecule, the polymer is capable of achieving a yield of said insulin or insulin-like molecule in the range of 70 to 99.9 %, and optionally a purity of said insulin or insulin-like molecule in the range of 95 to 100 %. In another variant of the invention the macroporous polymer is a seed expanded polymer.

The seed expanded polymer or other polymer comprises polyvinylaromatic monomers selected from one or more of divinylbenzene, trivinylbenzene, divinyltoluene, divinylnaphthalene, divinylanthracene and divinylxylene in one variant of the invention. The monounsaturated vinylaromatic monomer is selected from one or more of styrene and (C1-C4)alkyl-substituted styrenes.

In another variant, the polymer has, one or more of the following characteristics: (a) a surface area of 400 to 1000 square meters per gram;(b) an operational mesoporosity of 0.9 to 1.4 cubic centimeter per gram; c) an average particle size diameter of 5 to 20 microns; (d) a flow resistance value of less than 2,000 at 100 bar pressure; 0 a total insulin capacity of 60 to 150 grams insulin/liter of polymer and a dynamic insulin capacity of 50 to 150 grams insulin/liter of polymer.

In yet anther variant, the polymer comprises polymerized monomer units of: (a) 75 to 100 percent by weight of one or more polyvinylaromatic monomer, and (b) zero to 25 percent by weight of one or more monounsaturated vinylaromatic monomer. Optionally, the polymer is selected from one or more of divinylbenzene copolymer, styrene-divinylbenzene copolymer, divinylbenzene-ethylvinylbenzene copolymer and styrene-ethylvinylbenzene-divinylbenzene copolymer.

The packing of the dried material herein, in another variant, simultaneously provides: pressure stability and low deformability when exposed to pressures up to 100 bar; small particle size for high resolution, and uniform particle size distribution for minimal pressure drop; high loadabilty of the target molecule; and the ability to achieve high yield-purity of the target molecule in a minimum of cycle time. Pressure stability up to 100 bar is also facilitates small uniform particle size packings, since small particle size packings - which achieve high yield-puity - inherently generate high backpressure.

In one variant, the pore sizes of the resins are from 200 to 800 angstroms and the pore volumes are from 0.8 to 2.4 cc/cc. The pressure stabilty of the resin, measured by the "flow resistance" of the packed bed, is less than or equal to 2,000 at a pressure of 100 bar. (The term "flow resistance" is the inverse of the media permeability and is defined in a later section.)

In yet another variant of the invention, the chromatography takes place with a small, uniform particle size, pressure-stable, reversed phase polymeric resin manufactured by a seed-expansion process. This technology can be used to make uniform polymer beads of 0.5 microns to greater than 200 microns. Particles 5 to 50 microns in size are particularly useful, and particles 5 to 20 microns in size are most useful for end-polishing. In column chromatography applications, narrow particle size beads dramatically improve column resolution (i.e. yield-purity). Other advantages associated with monodisperse particle sizes dried using the methods described herein include efficient packing of columns, uniform flow, and low back pressure. Particle morphology, pore size, and surface area are another group of important physical properties that are advantageously controlled using the techniques described herein. These techniques enable the creation of a polymeric resin with excellent chromatographic separation for end-polishing steps, resistance to deformation under high pressure conditions, and uniform particle size for low backpressure and high resolution. The ability to create small, monosize, pressure-stable particles using the techiniques described herein is a crticial advantage of the present invention.

In the seeded, expansion polymerization process, swellable monodisperse seeds are first suspended in continuous aqueous phase with stabilizer. The monomer-containing initiators (normally in an emulsion form) are then added to swell the seed to a larger size. Since the seeds are uniform in size and have identical composition, they have the same swelling capacity, and they thermodynamically absorb the monomer in same amount for each individual seed. Thus, uniform monomer droplets are obtained. After suspension polymerization at elevated temperature, uniform polymer particles are formed.

The seed serves as a template and is a uniform particle containing polymer and/or oligomer which can easily absorb monomer. The resulting particle size of the final polymer is mainly determined by the following characteristics of the initial seed: size, size distribution, and swellability. There are a number of requirements for seed particles. First, because the seed is used as a template, its size distribution must be uniform to enable the particle size distribution of the final, enlarged polymer particle to be similarly uniform. Second, the seed should be able to quickly and homogeneously imbibe the monomer which also contains solvent (porogen). Quick swelling is particularly descired since the swelling process is often the most time-consuming step in the overall polymer process. Third, the seed should be chemically compatible with both the imbibed monomer and the final polymer, otherwise the seed may be expelled during the polymerization, leaving a hole in the final product. Finally, the seed must not have an adverse effect on the chemical, physical or performance properties of the final polymeric resin product. In one variant of the invention, the seed is one which is monodisperse, is oligomeric in composition, and is also of an optimum size and high swelling capacity to allow for the minimum number of expansions to meet the size of the targeted polymeric resin product. In another variant of the invention, the process of making resins used in the present invention includes the use of thiols as chain transfer agents.

There are several seeded expansion polymerization approaches to produce polymer particles, each of which can be used in combination with the invention disclosed herewith. One such process is called the two-step "activated" seeded expansion polymerization ("Ugelstad process"). US Patent No. 4,336,173. This process starts with a seed which is polymeric in composition. This polymeric seed must first be "softened" or pre-swollen using a highly water insoluble organic compound or swelling agent, in order to increase the overall swelling capacity. The resulting seed (which contains swelling agent) then is capable of absorbing a larger volume of monomer than the pure polymer seed itself..

In another variant of the invention, resins are made using an improved one step swelling/polymerization process, using seeds which are oligomeric in composition. If oligomer seeds are readily available - as is taught by the present invention - then the swelling process is easier and the cycle time is much shorter than the two-step swelling process of Ugelstad. The one-step swelling/polymerization process of the present invention, using oligomer seeds, is a critical enablement to synthesize reversed phase polymeric particles suitable for end-polishing, having the performance characteristics described above.

These techniques are used to solve the problem addressed by the present invention, by providing a macroporous, reversed phase polymeric resin suitable for end-polishing purification in one aspect. The polymeric resin achieves chromatographic performance in end-polishing steps comperable to high-quality RPC silica gel while demonstrating an abiltiy to resist significant deformation in a DAC column when exposed to pressures of up to 100 bar.

In that regard, the present invention provides a macroporous polymer comprising polymerized monomer units of (a) 50 to 100 percent by weight of one or more polyvinylaromatic monomer, and (b) zero to 50 percent by weight of one or more monounsaturated vinylaromatic monomer; wherein the polymer has (i) a total porosity of 0.7 to 2 cubic centimeter per gram; (ii) an operational mesoporosity of 0.7 to 1.9 cubic centimeter per gram; (iii) an average particle size diameter of 2 to 50 microns; (iv) a surface area of 200 to 1500 square meters per gram; (v) a flow resistance value less than 2,000 at 100 bar pressure; (vi) a total insulin capacity of 50 to 150 grams insulin/liter of polymer and a dynamic insulin capacity of 50 to 150 grams insulin/liter of polymer; and and vii)is capable of achieving a yield of said insulin or insulin-like molecule in the range of 70 to 99.9 %, and optionally a purity of said insulin or insulin-like molecule in the range of 95 to 100 %. (It is understood that insulin mixtures from different sources have different impurity profiles - which can itself create yield-purity differences - so a high-quality silica gel is shown as a reference standard, for comparison with the current invention.)

The present invention also provides a a seeded expansion polymerization process for preparing a macroporous polymer comprising polymerizing from zero to 50 percent monovinylaromatic monomer and 50 to 100 percent polyvinylaromatic monomer, in the presence of 40 to 100 percent of a porogen, and 0.5 to 10 percent free radical polymerization initiator, in an aqueous suspension; wherein all percent amounts are based on total weight of monomer.

The present invention further provides a method for end-polishing aqueous solutions of biomolecules mixtures such as insulin or insulin-like molecules, comprising contacting the aqueous solution with the aforementioned macroporous polymer dried using the methods described herein in a liquid chromatography column having an internal diameter of 2 to 100 centimeters, wherein the column is operated at a pressure of 10 to 100 bar.

As used throughout the specification, the following terms shall have the following meanings, unless the context clearly indicates otherwise.

The term "alkyl (meth)acrylate" refers to either the corresponding acrylate or methacrylate ester; similarly, the term "(meth)acrylic" refers to either acrylic or methacrylic acid and the corresponding derivatives, such as esters or amides. All percentages referred to will be expressed in weight percent (%), based on total weight of polymer or composition involved, unless specified otherwise. The term "copolymer" refers to polymer compositions containing units of two or more different monomers, including positional isomers. The following abbreviations are used herein: g = grams; ppm = parts per million by weight/volume, cm = centimeter, mm = millimeter, ml = milliliter, L = liter. Unless otherwise specified, ranges listed are to be read as inclusive and combinable and temperatures are in degrees centigrade ($^\circ$C).

Polymers of the present invention useful for end-polishing of biomolecules via high performance reverse phase liquid chromatography (such as in columns from 2 to 100 cm in diameter) typically have average particle size diameters from 2 to 150, preferably from 5 to 100, more preferably from 10 to 75 and most preferably from 5 to 20 $\mu$m. However, other uses of these polymers are also contemplated herein.

The macroporous polymers of the present invention typically are produced by seeded expansion polymerization, and possess surface areas from 200 to 1500, preferably from 300 to 1200 and more preferably from 400 to 1000 square meters per gram ($m^2$/g). The macroporous polymers are preferably those of the type described in U.S. Patent No. 4,382,124, for example, in which porosity is introduced into the polymeric beads by the presence of a porogen (also known as "phase extender" or "precipitant"), that is, a solvent for the monomer but a nonsolvent for the polymer. Conventional macroporous polymers, such as those prepared according to U.S. Patent No. 4,382,124, typically encompass the use of a wide range of porogen types, porogen concentrations relative to the monomer phase, monomer types, crosslinking monomer types, crosslinker levels, polymerization initiators and initiator concentrations. The present invention, however, is based on the discovery that macroporous polymers prepared using the following seeded expansion polymerization technique, combined with certain selected porogen types and concentrations relative to the monomer phase, with specific monomers and selected levels of crosslinking, together with selected polymerization initiator concentrations, have unexpectedly rigid polymer structures corresponding to improved performance in the separation and purification of biomolecules via high performance reverse phase liquid chromatography.

Suitable polyvinylaromatic monomers that may be used in the preparation of the macroporous polymers useful in the present invention include, for example, one or more monomer selected from divinylbenzene, trivinylbenzene, divinyltoluene, divinylnaphthalene, divinylanthracene and divinylxylene; it is understood that any of the various positional isomers of each of the aforementioned crosslinkers is suitable; preferably the polyvinylaromatic monomer is divinylbenzene. Typically the macroporous polymer comprises 50 to 100%, preferably 65 to 100% and more preferably 75 to 100% polyvinylaromatic monomer units.

Optionally, aliphatic crosslinking monomers, such as ethyleneglycol diacrylate, ethyleneglycol dimethacrylate, trimethylolpropane triacrylate, trimethylolpropane trimethacrylate, glycidyl methacrylate, diethyleneglycol divinyl ether and trivinylcyclohexane, may also be used in addition to the polyvinylaromatic crosslinker. When used, the aliphatic crosslinking monomers typically comprise as polymerized units, from zero to 20%, preferably from zero to 10%, and more preferably from zero to 5% of the macroporous polymer, based on the total monomer weight used to form the macroporous copolymer.

Suitable monounsaturated vinylaromatic monomers that may be used in the preparation of the macroporous copolymers useful in the present invention include, for example, styrene, $\alpha$-methylstyrene, ($C_1$-$C_4$)alkyl-substituted styrenes, halo-substituted styrenes (such as dibromostyrene and tribromostyrene), vinylnaphthalene and vinylanthracene; preferably the monounsaturated vinylaromatic monomer is selected from one or more of styrene and ($C_1$-$C_4$) alkyl-substituted styrenes. Included among the suitable ($C_1$-$C_4$)alkyl-substituted styrenes are, for example, ethylvinylbenzenes, vinyltoluenes, diethylstyrenes, ethylmethylstyrenes and dimethylstyrenes; it is understood that any of the various positional isomers of each of the aforementioned vinylaromatic monomers is suitable; preferably the monounsaturated vinylaromatic monomer is ethylvinylbenzene. Typically, the macroporous polymer comprises zero to 50%, preferably zero to 35% and more preferably zero to 25%, monounsaturated vinylaromatic monomer units.

Optionally, non-aromatic vinyl monomers, such as aliphatic unsaturated monomers, for example, vinyl chloride, acrylonitrile, (meth)acrylic acids and alkyl esters of (meth)acrylic acids (alkyl (meth)acrylates) may also be used in addition to the vinylaromatic monomer. When used, the non-aromatic vinyl monomers typically comprise as polymerized units, from zero to 20%, preferably from zero to 10%, and more preferably from zero to 5% of the macroporous copolymer, based on the total monomer weight used to form the macroporous copolymer.

Preferred macroporous polymers are selected from one or more of divinylbenzene copolymer, styrene-divinylbenzene copolymer, divinylbenzene-ethylvinylbenzene copolymer and styrene-ethylvinylbenzene-divinylbenzene copolymer; more preferable are divinylbenzene-ethylvinylbenzene and styrene-ethylvinylbenzene-divinylbenzene polymers.

Porogens useful for preparing the macroporous polymers of the present invention include hydrophobic porogens, such as $(C_7\text{-}C_{10})$aromatic hydrocarbons and $(C_6\text{-}C_{12})$saturated hydrocarbons; and hydrophilic porogens, such as $(C_4\text{-}C_{10})$alkanols and polyalkylene glycols. Either single porogen or mixed porogen systems can be used. Suitable $(C_7\text{-}C_{10})$aromatic hydro-carbons include, for example, one or more of toluene, ethylbenzene, ortho-xylene, meta-xylene and para-xylene; it is understood that any of the various positional isomers of each of the aforementioned hydorcarbons is suitable. Preferably the aromatic hydrocarbon is toluene or xylene or a mixture of xylenes or a mixture of toluene and xylene. Suitable $(C_6\text{-}C_{12})$saturated hydrocarbons include, for example, one or more of hexane, heptane and isooctane; preferably, the saturated hydrocarbon is isooctane. Suitable $(C_4\text{-}C_{10})$alkanols include, for example, one or more of isobutyl alcohol, *tert*-amyl alcohol, n-amyl alcohol, isoamyl alcohol, methyl isobutyl carbinol (4-methyl-2-pentanol), hexanols and octanols; preferably, the alkanol is selected from one or more $(C_5\text{-}C_8)$alkanols, such as, methyl isobutyl carbinol and octanol. Preferably, the porogen mixture comprises a hydrophilic porogen selected from one or more $(C_5\text{-}C_8)$alkanol and a hydrophobic porogen selected from one or more $(C_7\text{-}C_{10})$aromatic hydrocarbon.

Typically, using the techniques described herein, the total amount of porogen used to prepare the polymers of the present invention is most preferably from 45 to 100%, based on weight of the monomers. At porogen levels above 100%, the polymers have poor flow resistance values (high deformability) at high pressure conditions (100 bar piston pressure) in DAC columns. This can be seen from At porogen levels below 45%, the polymers have poor chromatographic properties, as measured by bovine insulin binding tests (see Table 1).

Polymerization initiators useful in preparing polymers of the present invention include monomer-soluble initiators such as peroxides, hydroperoxides and related initiators; for example benzoyl peroxide, *tert*-butyl hydroperoxide, cumene peroxide, tetralin peroxide, acetyl peroxide, caproyl peroxide, *tert*-butyl peroctoate (also known as *tert*-butylperoxy-2-ethylhexanoate), *tert*-amyl peroctoate, *tert*-butyl perbenzoate, *tert*-butyl diperphthalate, dicyclohexyl peroxydicarbonate, di(4-*tert*-butylcyclohexyl)peroxydicarbonate and methyl ethyl ketone peroxide. Also useful are azo initiators such as azodiisobutyronitrile, azodiisobutyramide, 2,2'-azo-*bis*(2,4-dimethylvaleronitrile), azo-*bis*($\alpha$-methyl-butyronitrile) and dimethyl-, diethyl- or dibutyl azo-*bis*(methylvalerate). Preferred peroxide initiators are diacyl peroxides, such as benzoyl peroxide, and peroxyesters, such as *tert*-butyl peroctoate and *tert*-butyl perbenzoate; more preferably, the initiator is benzoyl peroxide. Suitable use levels of peroxide initiator are 0.5% to 10%, preferably from 1 to 9%, more preferably from 2 to 7% and most preferably from 3 to 5%, based on the total weight of vinyl monomers. Most preferably, the free radical initiator is present at 2 to 7 percent, based on total weight of monomer, and is selected from one or more diacyl peroxide and peroxyester.

Dispersants and suspending agents useful for preparing the macroporous polymers of the present invention are nonionic surfactants having a hydroxyalkylcellulose backbone, a hydrophobic alkyl side chain containing from 1 to 24 carbon atoms, and an average of from 1 to 8, preferably from 1 to 5, ethylene oxide groups substituting each repeating unit of the hydroxyalkylcellulose backbone, the alkyl side chains being present at a level of 0.1 to 10 alkyl groups per 100 repeating units in the hydroxyalkylcellulose backbone. The alkyl group in the hydroxyalkylcellulose may contain from 1 to 24 carbons, and may be linear, branched or cyclic. More preferred is a hydroxyethylcellulose containing from 0.1 to 10 $(C_{16})$alkyl side chains per 100 anhydroglucose units and from about 2.5 to 4 ethylene oxide groups substituting each anhydroglucose unit. Typical use levels of dispersants are from about 0.01 to about 4%, based upon the total aqueous-phase weight.

Other dispersants and suspending agents useful for making the macroporous polymers of the present invention are polymers containing hydrophilic backbones, which can orient their lipophilic portions to the monomer phase and their hydrophilic portions to the aqueous phase at the interface of the two phases. These polymeric dispersants include celluloses, polyvinyl pyrrolidones, polyvinyl alcohols, starches and the like. Mixtures of dispersants may also be used. These other dispersants tend to be less preferred, as they tend to produce a somewhat greater amount of agglomerated or otherwise undesirable material.

Optionally, the macroporous polymers may be coated or post-functionalized with various conventional ionizable functional groups (weak-acid functional group, such as a carboxylic acid group; weak-base functional group, such as a primary, secondary or tertiary amine functional group; strong acid functional group, such as sulfonic acid group;

strong base functional group, such as quaternary ammonium chloride or hydroxide group) by known methods, such as conventional sulfonation, chloromethylation and amination.

The macroporous polymers of the present invention are characterized by improved permeability (low flow resistance) that is the result of the enhanced rigid polymer structure and the selected porosity introduced into the polymer during polymerization. The permeability ($K$) is related to the backpressure generated in a column through Darcy's Law (Equation 1):

$$\Delta P / L = \mu V/[K(d_p)^2] \qquad \text{Equation 1}$$

where:

$\mu$ = viscosity (milliPascal•second or centipoise)
$V$ = linear velocity (cm/hr)
$\Delta P$ = pressure drop (bar)
$L$ = bed height (cm)
$d_p$ = mean particle size of the polymer (microns)

The units of the above variables are expressed in their common form; it is understood that unit conversion is required to render Equation 1 dimensionless. The more rigid (that is, less compressible) the polymer, the greater the permeability of the polymer, translating to lower backpressure for any given combination of solvent viscosity, linear velocity and particle size. Under laminar flow conditions, which are typical for chromatographic separation and purification applications, the backpressure in a column can also be expressed by the Carman-Kozeny Equation (Equation 2):

$$\Delta P / L = 150 \cdot [(1-\varepsilon)^2/\varepsilon^3] \cdot \mu V/(d_p)^2 \qquad \text{Equation 2}$$

where:

$\varepsilon$ = interparticle void volume (cm$^3$/cm$^3$)

References, such as <u>Fundamentals of Preparative and Nonlinear Chromatography</u>, G. Guiochon, S. Goshan Shirazi and A. Katti; Academic Press (1994) and <u>Unit Operations in Chemical Engineering</u>, W.L. McCabe, J.C. Smith and P. Harriott; McGraw Hill (1985), may be consulted for further general and specific details on Darcy's Law and the Carman-Kozeny Equation (Equations 1 and 2).

By combining Equations 1 and 2, it can be seen that permeability (or flow resistance) in the chromatography column is related to the interparticle void volume of the polymer resin bed (that is, the volume between polymer particles); $\varepsilon$ is expressed as volume of voids per unit volume of polymer bed. This relationship is expressed by Equation 3:

$$1/K = 150 \cdot [(1-\varepsilon)^2/\varepsilon^3] \qquad \text{Equation 3}$$

For the purposes of the present invention, we define the characteristic "flow resistance" value of a polymer to be the inverse of the permeability. The characteristice "flow resistance" value is an indication of how well the polymer will perform under medium to high pressure conditions: low flow resistance values represent low compressibility and high flow resistance values represent poor compressibility.

Additionally, according to Darcy's Law, expressions for either the permeability or the flow resistance commonly include the particle size effect (dp in Equation 1). One objective of the present invention is to provide improved flow resistance via increased polymer rigidity, independent of particle size effects. It is understood that reduced particle size alone would, for a given polymer, generate higher backpressures as given by Equations 1 and 2.

Typically, macroporous polymers, in one variant of the present invention, have flow resistance values (that is, $1/K$) from 700 to less than 1,800, preferably from 700 to less than 1,500 and more preferably less than 1,300 at operating pressures of 10 bar (medium pressure). At higher pressure operation (represented by 60 bar), the macroporous polymers have flow resistance values from 1,500 to less than 7,000, preferably from 1,500 to less than 5,000 and more preferably less than 4,500. At highest pressure operation (represented by 100 bar), the macroporous polymers have flow resistance values from 1,500 to less than 7,000, preferably from 1,500 to less than 5,000 and more preferably less than 4,500. Macroporous polymers suitable for use in RPC have flow resistance values of (i) less than 1,800 at a pressure of 10 bar pressure and (ii) less than 7,000 at 60 bar pressure. Polymers having flow resistance values greater than the limits indicated above do not provide sufficient resistance to compression at the medium to high pressures found in commercial RPC columns and consequently suffer from reduced throughput and column pressure buildup during operation.

The macroporous polymers of the present invention are characterized by selected porosities and pore size distributions produced by the porogen types and ratios used to prepare the polymers. Porosities were determined using a Micromeretics™ ASAP-2400 nitrogen Porosimeter. Porosities according to IUPAC nomenclature are as follows:

Microporosity =   pores less than 20 Ångstrom units
Mesoporosity =   pores between 20 and 500 Ångstrom units
Macroporosity =   pores greater than 500 Ångstrom units

For the purposes of the present invention, "operational" microporosity is defined as pores having a diameter of less than 50 Ångstrom units and "operational" mesoporosity is defined as pores having diameters between 50 and 500 Ångstrom units. The slight difference between "operational" porosity, as used herein, and porosity defined according to IUPAC nomenclature is due to the fact that 50 Ångstrom units is a more suitable and appropriate cutoff point (compared to 20 Ångstrom units) in order to accommodate the sorption of biomolecules of interest in the macroporous polymers of the present invention.

The macroporous polymers of the present invention, in one variant, have a total porosity of 0.7 to 2, from 0.9 to 1.8 and from 1.0 to 1.7 $cm^3$/g. In yet another variant, the macroporous polymers have an operational mesoporosity of 0.7 to 1.9, from 0.8 to 1.7 and preferably 0.9 to 1.4 $cm^3$/g. The macroporous polymers have an operational microporosity from zero to 0.5, from zero to 0.3, from zero to 0.2 and from zero to less than 0.1 $cm^3$/g. The macroporous polymers can optionally have a macroporosity from zero to 0.6, preferably from zero to 0.5 and more preferably from zero to 0.3 $cm^3$/g.

Insulin purification abilty is an indicator of the capability of a polymer matrix as a suitable medium for large scale separation and purification of biomolecules of similar size and molecular configuration. Some embodiments of the invention are described in detail in the following Examples. All ratios, parts and percentages are expressed by weight unless otherwise specified, and all reagents used are of good commercial quality unless otherwise specified. Abbreviations used in the Examples and Tables are listed below with the corresponding descriptions:

MIBC =   methyl isobutyl carbinol (4-methyl-2-pentanol)
DVB =   divinylbenzene (mixture of meta/para isomers)
EVB =   ethylvinylbenzene (mixture of meta/para isomers)
BPO =   benzoyl peroxide
rpm =   revolutions per minute
v/v =   volume/volume
w/v =   weight/volume
μm =   micron
nm =   nanometer
g/L =   grams/Liter
$cm^3$/g =   cubic centimeter per gram
μl =   microliter
NA =   not analyzed

## EXAMPLE 1

The following procedures are used to make monosized, submicron polystyrene particles, and monosized 3.0 micron oligomer seeds, used in the present invention. The 0.25 micron polystyrene particles were synthesized using an emulsion polymerization process developed by Frazza et al. ( U.S. Patent No.5,147,937.This process involves using a surfactant, AEROSOL MA-80 (Sodium Dihexyl Sulfosuccinate) to stabilize micelles and a water soluble initiator (ammonium persulfate). The reaction is carried out under inert atmospheres with the total charge of monomer and initiator into the kettle at the beginning of the reaction. Sodium dihexyl sulfosuccinate has limited solubility in water but is well dispersed in the aqueous phase, as a result, slightly opaque aqueous mixtures are observed with concentration reaching 1%. A stable and bluish latex with particle size at 0.25 microns is obtained at almost 100% yield after the polymerization. The particle size was measured by BI-90 or BI-90 plus or CHDF-2000 (Capillary Hydrodynamic Fractionation).

Synthesis of 0.6 μm Oligomer Seeds

0.5 microns oligomer seeds were synthesized from 0.25 micron polymer seeds based on seed emulsion polymerization (US Patent No. 5,846,657).

| Mixture | Components | Parts by Weight |
|---|---|---|
| A | Water | 185 |
| | 0.25 μm Polymer Particles Emulsion | 30.3 |
| B | Butyl Acrylate | 82 |
| | Styrene | 18 |
| | 10% aqueous Sodium Dodecylbenzenesulfonate | 2.5 |
| | Water | 32 |
| C | 1-Hexanethiol | 18.8 |
| | 10% aqueous sodium dodecylbenzenesulfonate | 2.8 |
| | Water | 11 |
| D | Potassium Persulfate | 0.11 |
| | Water | 18 |
| E | t-Butyl Hydroperoxide | 0.18 |
| | Water | 3.7 |
| F | 3% aqueous sodium formaldehyde sulfoxylate | 0.41 |

Mixture A was added to a reactor and heated to 88 °C with stirring. Mixtures B, C, and D were added, with stirring, to the reactor over a period of 3 hours, after which the temperature was maintained at 88 °C, with stirring, for 90 minutes, The reactor contents were cooled to 65 °C, with stirring, for 1 hr, after which the reactor contents were cooled to room temperature, The resulting emulsion polymer particles had a diameter of 0.5 micron as measured by a Brookhaven Instruments BI-90.

Synthesis of 3 μm Oligomer Seeds

Mixture A was charged into a reactor with a stirring. Mixture B was homogenized and charged into above reactor. After the hexanethiol was completely absorbed by the oligomer seed, emulsion C was charged into the reactor. The reactor was then stirred for 20 hrs at room temperature and then heated to 85 C for 1 hour and then 95 C for another house. Cool to room temperature, the uniform oligomer particles of size at 3 micron was obtained.

| Mixture | Components | Parts by Weight |
|---|---|---|
| A | Water | 185 |
| | 10% aqueous sodium dodecylbenzenesulfonate | 0.5 |
| | 0.6 μm Oligomer Seed | 2.67 |
| B | 1-Hexanethiol | 18.8 |
| | 10% aqueous sodium dodecylbenzenesulfonate | 2.8 |
| | Water | 11 |
| C | Butyl Acrylate | 82 |
| | Styrene | 18 |
| | t-butyl peroctoate | 3.0 |
| | 10% aqueous Sodium Dodecylbenzenesulfonate | 2.5 |
| | Water | 32 |

It is apprecieated that the various seeds and resin made in example one can be dried using the process described in the invention.

## EXAMPLE 2

The following example illustrates the preparation of a reversed phase polymeric resin of the present invention, which can be used as packing in biomolecule/pharmacuetical separation and end-polishing. It is appreciated that this reversed phase polymeric resin can also be dried using the novel drying process described herein. Moreover, it is understood that the drying process herein can be used to make other resins used in water contaminant removal and other industrial processes where resins and adsorbents are used.

A seed charge was prepared in a 500 ml beaker by combining the following ingredients: 21.3 g of the 3.0 micron oligomer seed from EXAMPLE 1 @ 30.1 % solids, 8.5 g of a 1% solusol solution, and 105.5 g of deionized water. The seed solution was charged into a 1.8-liter Buchi stainless steel reaction flask ("reactor"), equipped with a mechanical stirrer and thermocouple. This was followed by a 46.4 g charge of deionized water to rinse the transfer line. The stirrer was set at 150 rpm.

A monomer/porogen emulsion was prepared in a 500 beaker by the adding the following ingredients: 116.1 g of Divinylbenzene (80% DVB/20 % EVB), 69.7 g of MIBC, 142.0 g of deionized water, and 1.49 g of a 75 wt % Solusol-water solution. The ingredients were mixed in the beaker to form an emulsion. This emulsion was then pumped from the beaker into the reactor through a Silverson ILE emulsifier (set @ 50 % output), over a period of 40 minutes.

The reactor was heated to 60°C over period of 1 hour and held at this temperature for 2 hours, in order to allow the oligomer seed to swell with the monomer and porogen emulsion.

An emulsified initiator solution was then added after the two hour hold at 60°C. This emulsion was prepared in a 50 ml beaker by adding 1.29 g of tert-Butyl Peroctoate to 18.7 g of 1 % solution of Solusol. These ingredients were homogenized to form an emulsion and transferred from the beaker into the reactor in one shot. This transfer was followed by using 24.1 g of deionized water to rinse the transfer line. The reactor was then held at 60°C for an additional 2 hours.

An aqueous solution was prepared by mixing 2.4 g of K4MP (methylhydroxyethyl cellulose, available from Dow Chemical Company) into 334.9 g of deionized water. After a 2 hour hold, the aqueous solution was transfer into the reactor and follow by 15.8 g of deionized water to rinse the transfer line.

The reaction mixture (combined organic and aqueous phases) was stirred at 120 rpm at 60°C temperature for 30 minutes and then heated to 80°C over 60 minutes. The reaction mixture was held at 80°C for 12 hours to polymerize the reactants.

After the polymerization reaction was complete, the temperature of the reaction mixture was adjusted to 50°C while stirring. The pH of the aqueous phase of the aqueous/polymer mixture was adjusted to 5.0 by slowly adding 10% sulfuric acid to the aqueous until the final pH was reached.

A mixture of 14.4 grams of $\beta$-1,4-glucan-4-glucanhydrolase enzyme (Cellulase® 4000, available from Valley Research, Inc.) was mixted into 134.5 g of deionized water and then charged into the reactor. The temperature was held at 50°C for 12 hours. The pH of the aqueous phase of the aqueous/polymer mixture was then adjusted to 12.0 with 50% aq. sodium hydroxide solution, and the temperature in the reactor was increased to 90° C. The reactor was maintained at this temperature for 5 hours.

The aqueous/polymer mixture was cooled to room temperature, removed from the reactor, and placed into a 1-liter chromatography column. The aqueous phase was filtered from the polymer, and then the packed bed of polymer was washed with 2 liters of deionized water, followed by 3.5 liters of acetone and finally with 3.5 liters of methanol. The wet polymer was dried at a temperature of 100°C, under 2.5 mm (0.1 inch) mercury vacuum, for a period of 16 hours.

## EXAMPLE 3

This example describes evaluation of the macroporous polymers of the present invention for insulin binding capacity. These polymers were dried using standard drying techniques, and not the novel drying techniques described herein. It is appreciated that use of the novel drying techniques described herein imparts improved performance characteristics on the macroporous polymers. Samples of approximately 5 ml volume were packed into small-scale test columns (1.0 cm internal diameter×6.3 cm length) and evaluated for frontal adsorption of bovine insulin from aqueous solution; this test was designed to determine if the polymer matrix allowed rapid, efficient mass transfer and high capacity for a target probe molecule (bovine insulin) under typical use conditions.

Five grams of the dried polymer resin (prepared according to Example 2 unless indicated otherwise) was mixed with 35 ml of 20% ethanol/water (v/v), and allowed to stand at ambient temperature for at least 2 hours. The polymer slurry was then packed into an stainless steel column (dimensions: 10 mm I.D. X 100 mm length, available from Alltech Corp.) by flow packing in 20% v/v ethanol/water solution at a linear velocity of 160 cm/hr. The quality of column packing was confirmed by injecting a 50 μL pulse of 1% sodium chloride solution in deionized water into the column, while flowing 20% v/v ethanol/water eluent at a linear velocity of 40 cm/hr. The efficiency (plates/meter) and asymmetry of the column were calculated using Hewlett Packard Chemstation® Software. Target values for acceptable column packing parameters were a minimum of 5,000 plates/meter efficiency with asymmetry of 0.8 to 1.8.

A solution of bovine insulin (available from Sigma-Aldrich Chemical Co), at a concentration of 5 grams per liter of water, was prepared. A total of 200 ml of this solution was pumped into the column at a linear velocity of 150 cm/hr, and a UV spectrophotometric detector (Spectraflow® 783, available from ABI Analytical, Kratos Division) set at a wavelength of 291 nm was used to monitor the bovine insulin in the effluent.

The dynamic capacity (g/L) of the polymer resin was obtained by recording the amount of insulin sorbed onto the polymer resin at the point of 1% insulin breakthrough (relative to the total amount of insulin sorbed onto the polymer resin) in the UV-response curve. The total capacity of the resin (g/L) was determined by measuring the insulin concentrations of the influent and effluent solutions by UV spectrophotometry, and then performing a mass balance.

Bovine insulin binding capacity is used as a screening test to measure performance in use. The results of this capacity testing are shown in Table 1. The resin from Example 2 is represented by sample number 1 - 3 in this table, while the samples numbered 1 - 1, 1 - 2, 1 - 4, and 1 - 5 represent variations in the porogen level in the fomulation. To maximize product performance, a high binding capacity is desirable with a minimum porogen level.

The samples numbered 1 - 6, 1 - 7, and 1 - 8 represent resins prepared with technology disclosed in U.S. Patent No. 6,387,974. In comparison to resins prepared U.S. 6,387,974, the samples prepared by the technology described herein show the unexpected result of high insulin binding capacity at much lower levels of porogen. It will be shown in the following examples that this is a critical enablement for creating a reversed phase polymeric resin having the desired end-polishing performance while being pressure-stable at 100 bar.

## EXAMPLE 4

The following example illustrates the end-polishing of bovine insulin using the polymeric resin from Example 2. The resin from Example 2 was packed into a stainless-steel chromatography column with dimensions of 4.6mm I. D. X 250 mm length. The following mobile phases were used in this example: "Buffer A" = 100 mM glycine in deionized water at pH 4.0; "Buffer B" = 100% HPLC-grade Acetonitrile.

The insulin used in this example was bovine insulin that had a crude purity of 92% (purchased from Sigma-Aldrich Company). A bovine insulin solution was prepared by dissolving a total of 75 mg of this insulin into 12.5 mL of "loading buffer," which contained 0.1 % glycine in 10% v/v acetonitrile in deionized water, adjusted to pH 2 with 30 mL of TFA. Sufficient insulin solution was loaded onto the column at a rate of 0.27 ml/min (100 cm/hr) in order to achieve a column concentration of 18 mg insulin/mL column.

After loading, the column was washed with one column volume (4.15mL) of loading buffer, also at a flowrate of 0.27 ml/min. The insulin was eluted from the column by using a linear gradient extending from 17.5% to 30% Buffer B over 32.5 column volumes (135mL) of solvent. The solvent flowrate during eluation was 0.27 mL/min. The effluent was monitored with UV @ 280nm, and fractions were collected at a rate of one every two minutes.

Fractions were analyzed using a reversed phase HPLC column (4.6 mm I.D. x 250 mm L) from Agilent Technologies, filled with Zorbax 300SB-C8, 300A, 5 micron resin. The following solvent conditions were used in fraction analysis: Buffer A: 0.1 v/v % TFA in HPLC grade water; Buffer B: 0.1 v/v % TFA in HPLC grade acetonitrile. An Agilent 1100 HPLC was used for the analysis, which was was run at a column temperature of 25C with a flow rate 0.8 ml/min. The elution conditions included a hold at 25 % Buffer B for 3 min., then a gradient of 25 % to 35 % Buffer B over 30 minutes.

Results from the preparative purification of bovine insulin are shown in Table 2. The resin from Example 2 is represented by sample number 1 - 3 in this table. Other commercial polymeric resins are shown for comparison and include Sample 1 - 10 (Amberchrom™ CG300S), and Sample 1 - 9 (Amberchrom™ XT20, a commercial material enabled by U.S. 6,387,974). Sample 1 - 11 represents a high-quality reversed phase silica packing (Kromasil™ 100A, 13 micron silica, commercially available from Eka Chemicals) which is shown here for a performance reference standard. The results in Table 2 indicate that only the reversed phase polymeric resin of the current invention provides end-polishing purification performance comperable to high-quality reversed phase silica.

## EXAMPLE 5

The following example illustrates the end-polishing of insulin or insulin like molecules using the polymeric resin from Example 2. The resin from Example 2 was packed into a stainless-steel chromatography column with dimensions of 4.6mm I.D. X 250 mm length. The following mobile phases were used in this example: "Buffer A" = 100 mM glycine in deionized water at pH 4.0; "Buffer B" = 100% HPLC-grade Acetonitrile.

The insulin used in this example was recombinant human insulin, purchased from from Sigma, which had a purity of 92 %. An solution was prepared by dissolving a total of 75 mg of this insulin into 12.5 mL of "loading buffer," which contained 0.1 % glycine in 10% v/v acetonitrile in deionized water, adjusted to pH 2 with 30 mL of TFA. Sufficient insulin solution was loaded onto the column at a rate of 0.27 ml/min (100 cm/hr) in order to achieve a column concentration of 18 mg insulin/mL column. After loading, the column was washed with one column volume (4.15mL) of loading buffer, also at a flowrate of 0.27 ml/min.

The insulin was eluted from the column by using a linear gradient extending from 17.5% to 30% Buffer B over 32.5 column volumes (135mL) of solvent. The solvent flowrate during eluation was 0.27 mL/min. The effluent was monitored with UV @ 280nm, and fractions were collected at a rate of one every two minutes.

Fractions were analyzed using a reversed phase HPLC column (4.6 mm I.D. x 250 mm L) from Agilent Technologies, filled with Zorbax 300SB-C8, 300A, 5 micron resin. The following solvent conditions were used in fraction analysis: Buffer A: 0.1 v/v % TFA in HPLC grade water; Buffer B: 0.1 v/v % TFA in HPLC grade acetonitrile. An Agilent 1100 HPLC was used for the analysis, which was was run at a column temperature of 25°C with a flow rate 0.8 ml/min. The elution conditions included a hold at 25% Buffer B for 3 min., then a gradient of 25 to 35% Buffer B over 30 minutes.

Results from the preparative purification of bovine insulin are shown in Table 3. The resin from Example 2 is represented by sample number 1 - 3 in this table. Other commercial polymeric resins are shown for comparison and include Sample 1 - 10 (Amberchrom™ CG300S), and Sample 1 - 9 (Amberchrom™ XT20, a commercial material enabled by U.S. 6,387,974). Sample 1 - 11 represents a high-quality reversed phase silica packing (Kromasil™ 100A, 13 micron silica, commercially available from Eka Chemicals) which is shown here for a performance reference standard. The results in Table 2 indicate that only the reversed phase polymeric resin of the current invention provides end-polishing purification performance comperable to high-quality reversed phase silica.

Using this technique, human insulin can be very satisfactory separated from the impurities. A yield of 70% insulin was obtained at a purity level of 99.5%. Total recovery of loaded insulin was >90.

## EXAMPLE 6

This example describes how the macroporous polymers (dried using standard techniques) were evaluated for their permeability characteristics, that is, resistance to compression. The polymers are characterized by their "flow resistance" or $1/K$ values (see Equation 3).

In industrial high pressure liquid chromatography, it is common to use columns that are equipped with a piston that exerts a force (pressure) directly onto the resin. It is preferred to keep the piston actively compressing the bed at a pressure that is equal to or greater than the maximum anticipated flow pressure throughout the chromatographic cycle. In order to test the permeability characteristics of the polymers of the present invention, polymer resin was packed into a ProChrom™ Dynamic Axial Compression column (Model LC.50, commercially available from Novasep) and compressed with the piston set first at 100 bar compression pressure. The purpose of this testing was to characterize the permeability characteristics (resistance to compression) of each sample. A detailed description follows:

In general, to determine the interparticle void volume (or permeability) of the polyvinylaromatic polymer bed, the mobile phases must be selected for compatibility with the probe molecule such that they eliminate or reduce interaction of the probe molecule with the hydrophobic surface of the polyvinylaromatic polymer. Conventional probe molecules, such as linear polystyrene, Blue dextran and polyethylene glycol may be used, but require the use of non-polar mobile phases (such as tetrahydrofuran and toluene). The probe molecules used in the method described below, however, do not require the use of non-polar solvents and can be used in any aqueous-organic solvent system, for example, 20% ethanol.

To determine the total volume of voids in the column (both intraparticle and interparticle), 2 ml of 1% sodium chloride (w/v in 20% aqueous ethanol) was injected into the system. The salt was detected by a conductivity detector. To determine the interparticle voids volume only, a solution of 20% ethanol (aqueous) containing 1% (w/v) of a 0.1-0.9 μm ionically-charged emulsion polymer or finely ground ionically-charged polymer (for example, crosslinked polystyrene with ionizable functional groups, such as weak-acid functional group (carboxylate group), strong acid functional group (sulfonate), or quaternary ammonium chloride group) was injected into a stream of 20% ethanol (aqueous) flowing through the bed. The particles were detected by UV detector, set at 280 nm. Due to the size of the ionically-charged polymer probe particles, the particles did not penetrate the pores of the polymer resin of this invention. Due to the surface nature of the ionically-charged polymer probe particles (these particles had aromatic structure and a high concentration of ionogenic groups distributed throughout the surface) hydrophobic attraction/retention to the polymer resin of this invention was prevented.

Total void volume volume of the polymer bed (salt probe elution volume) was determined and combined with the void volume external to the polymer particles (ionically-charged emulsion or ground polymer elution volume). These values, together with the measured bed volume, were used to calculate $\varepsilon$ in Equations 2 and 3.

Results from the preparative purification of bovine insulin are shown in Table 4. The resin from Example 2 is represented by sample number 1 - 3 in this table. Other commercial polymeric resins are shown for comparison and include Sample 1 - 10 (Amberchrom™ CG300S), Sample 1 - 9 (Amberchrom™ XT20, a commercial material enabled by U.S. 6,387,974), Sample 1 - 12 (Source™ 30 RPC, commercially available from General Electric), and Sample 1 - 13 (PLRP™ 10-15 micron, commercially available from Polymer Labs). Sample 1 - 11 represents a high-quality reversed phase silica packing (Kromasil™ 100A, 13 micron silica, commercially available from Eka Chemicals) which is shown here for a performance reference standard. The results in Table 4 indicate that at 100 bar piston pressure, only the reversed phase polymeric resin of the current invention is not substantially deformed; all other reversed phase polymeric packings undergo substantial deformation and flow resistance increase.

## EXAMPLE 7

The following examples illustrate various methods of drying. The samples to be dried were prepared as follows: 335 g of water wet(20 % solids) experimental 10 um polydivinylbenezne porours resin was weigh into 2000 ml beaker. To the beaker, 1500 mls of D.I water was added and then gentle mixed.

Spray drying was performed on the sample as follows: a Buchi ™ Mini Spray dryer B-191 was setup to run a resin slurry. The spray dryer flow rate was set a 10 ml/min with deionized ("DI") water to set the following operating conditions under which the spray dryer was used: sray flow rate: 10 ml/min, inlet tmperature: 140 degrees Celcius, and outlet temperature: 80 degrees Celcius. The feed hose was immersed into the beaker filled with resin slurry and resin slurry was then fed into the spray dryer at 10 ml/min. After 2.5 hrs of spray drying, 67 g of resin was collect with a precent solids of 99.5 %. The product was a free flowing powder with no sign of aggregation under visible examination at 1x or 100x using a microscope.

### COMPARATIVE EXAMPLE 7A

The following example illustrates a comparative example using vacuum oven drying. The sample that was dried was prepared as follows: 335 g of water wet(20 % solids) experimental 10 um polydivinylbenezne porours resin was place into 9: x 11" SS pan. The resin was applied into the pan in a way to form a thin layer at bottom. The pan was then place into vacuum oven at room temperature and a vacuum of 40 mm of Hg was applied. The oven was then heated up 99 degrees celcius over 4 hrs and then held there for 18 hrs. The vacuum oven was cooled to room temperature and the oven was pressurize with nitrogen to atmospheric pressure. The pan was removed from the oven and sample was reweigh to yielded 68 g of resin with a % solids of 99.8 %.

The sample was visibility aggregated in the pan and the aggregates were very difficult to break up into individual 10 um particles. The sample was then dry screen using a 20 um screen mesh to yield 10 g of free flowing powder.

## EXAMPLE 8

The following example illustrates column packing using the material made using the drying processes described in the present invention that imparts performance improvements to the resin. Dry resin was hydrated using a solvent solution consisting of 60% isopropanol/40% water. For packing a 1cm I.D. x 25cm L column (19.625mL volume), 14g of dry resin was added to 100mL of the solvent solution. Based on a resin density of 0.35g/mL, this provided a 40% resin slurry (volume/volume). The material was allowed to hydrate for at least 2 hours prior to packing.

The resin slurry was re-suspended using overhead agitation and then sonicated for approximately two minutes to ensure homogeneity. The slurry was then carefully poured into a stainless steel packing apparatus. The packing apparatus consisted of a packing reservoir and the stainless steel 1cm I.D. x 25cm L column. The packing apparatus was then connected to an HPLC pump using a packing solution identical to the hydration solution. Flow was slowly ramped over the course of two-three minutes to a target flow rate. Pressure was monitored using an in-line pressure gauge, and the maximum packing pressure applied was 1000psi. Pressure was kept constant by reducing flow rate during the packing. When a stable pressure and flow rate were achieved (15-20 minutes), packing was considered to be complete. The column was then removed from the packing reservoir and an endfitting was placed on the top of the column.

Sodium chloride column evaluations were performed as follows: the column was then placed on an HPLC system equipped with a conductivity meter. The column was equilibrated for 20 minutes at 2mL/minute with a 20% ethanol/80% water mobile phase. After equilibration, the flow rate was reduced to 0.5mL/minute and 50μl of a 1% sodium chloride solution was injected onto the column. Column efficiency (plates/M) was calculated from the eluted salt peak.

Human insulin evaluations on material dried using the processes of the present invention were performed as follows: the efficiency of spray-dried 10μm material was compared to competitive 10μm silica columns (packed by vendor) using human insulin (Sigma) under non-retained conditions. The columns were first equilibrated in a 50% acetonitrile/50% water/0.1% TFA mobile phase, and then 50µl of a 5mg/mL human insulin was injected on the column. The evaluation was performed in duplicate at five different flow rates: 0.25, 0.50, 1.0, 2.0, and 3.0mL/minute. Detection was performed with a UV detector at 280nm. Column efficiency (plates/M) was calculated from the eluted human insulin peak.

The qualitative packing profile of the spray-dried material was more reproducible than that of the conventionally dried materials. The pressure drop of the conventionally dried resins was subject to greater fluctuations than the pressure drop of the spray-dried material. In addition, the final flow rate of the conventionally-dried material was lower than that of the spray-dried materials.

The results of the sodium chloride evaluations are shown in Table 5. The conventionally dried resins at lab, pilot, and production scale provided efficiencies in the 40,000 to 47,000 plates/M range. In addition, other 10µm, commercially available polymeric materials from Polymer Labs and Hamilton provided efficiencies in the 40,000 to 45,000 plates/M range. The spray-dried 10µm resin provided efficiencies in the 52,000-59,000 plates/M range. Of course one can modulate the types of drying or combine various drying methods to module the plates/M range value.

The method of calculating the packing efficiencies that was is as follows: The packing efficiencies are calculated based on the Agilent Chemstation software and are based on total plates per meter of column length. The calculation should be as follows:

$$N = 5.54 \, (T_r / W_{1/2})^2$$

where $T_r$=retention time in minutes and $W_{1/2}$=peak width measured at half peak height (minutes)
This is then divided by the column length in meters to get the total plates per meter. The column length was 25cm so each efficiency was calculated by dividing the above equation by 0.25M.

The results of the human insulin evaluation comparisons are shown in Table 7. As demonstrated in the Table, the spray-dried 10µm polymeric material provided similar efficiencies to that of the competitive 10µm silica products over the entire range of flow rates that were evaluated.

TABLE 1

| EFFECT OF POROGEN LEVEL ON COLUMN BINDING CAPACITY FOR BOVINE INSULIN | | | |
|---|---|---|---|
| Sample No. * | porogen level (%) | Insulin Capacity (mg/ml) | |
| | | 1% | total |
| 1- 1 | 43% | 9 | 13 |
| 1-2 | 54% | 51 | 55 |
| 1-3 | 60% | 56 | 71 |
| 1-5 | 67% | 44 | 50 |
| 1-6 | 100% | 79 | 88 |
| 1-7 | 67% | 5 | 15 |
| 1-8 | 100% | 7 | 52 |
| 1-9 | 122% | 80 | 100 |

Samples 1 - 1 through 1 - 6 represent materials prepared according to the invention described in Example 2, while Samples 1 - 7 through 1 - 9 represent materials prepared according to U.S. Patent No. 6,387,974.

TABLE 2

| END-POLISHING CHROMATOGRAPHY OF BOVINE INSULIN | | | |
|---|---|---|---|
| **Commercial Name** | **Sample No.** | **Insulin Yield at 98.0% purity** | **Insulin Yield at 99.0% purity** |
| Amberchrom™ CG300 | 1 - 10 | 76% | 4% |
| Amberchrom™ XT20 | 1- 9 | 92% | 80% |
| Non - commercial | 1 - 3 | 94% | 92% |
| Kromasil™ 100 A silica | 1 - 11 | 96% | 89% |

TABLE 3

| END-POLISHING CHROMATOGRAPHY OF HUMAN INSULIN | | | |
|---|---|---|---|
| **Commercial Name** | **Sample No.** | **Insulin Yield at 98.0% purity** | **Insulin Yield at 99.0% purity** |
| Amberchrom™ CG300 | 1 - 10 | 76% | 4% |
| Amberchrom™ XT20 | 1 - 9 | 92% | 80% |
| Non - commercial | 1 - 3 | 94% | 92% |
| Kromasil™ 100 A silica | 1 - 11 | 96% | 89% |

TABLE 4

| PRESSURE TESTING OF VARIOUS REVERSED PHASE RESINS AT 100 BAR PISTON PRESSURE IN A DAC COLUMN | | | | |
|---|---|---|---|---|
| **Commercial Name** | **Sample No.** | **void volume $\varepsilon$ (cc/cc)** | **flow resistance $1/\kappa$** | **Relative Flowrate** |
| Amberchrom™ CG300 | 1 - 10 | 0.18 | 17,294 | 6 |
| Source™ 30 RPC | 1 - 12 | 0.21 | 10,109 | 10 |
| PLRP™ | 1 - 13 | 0.24 | 6,267 | 17 |
| Amberchrom™ XT20 | 1- 9 | 0.28 | 3,542 | 30 |
| Non - commercial | 1-3 | 0.34 | 1,662 | 63 |
| Kromasil™ 100 A silica | 1 - 11 | 0.38 | 1,051 | 100 |

TABLE 5

| Comparison of Column Efficiencies | |
|---|---|
| **Description** | **Plate Count (plates/M)** |
| Production Material - conventional drying A | 40,428 |
| Pilot Material - conventional drying B | 62,016 |
| Pilot Material - conventional drying C | 40,372 |
| Pilot Material - conventional drying D | 47,992 |
| Pilot Material - conventional drying E | 40,776 |
| Pilot Material - conventional drying F | 45,224 |
| Lab Material - conventional drying 8 micron - G | 46,680 |
| Hamilton PRP-1 10 micron | 44,944 |
| Polymer Labs PLRP-S 10 micron | 47,492 |
| Lab Material - spray drying H | 57,016 |
| Lab Material - spray drying I | 59,276 |
| Lab Material - spray drying J | 52,644 |

Table 7

| Linear Velocity (cm/hr) | Kromasil | Kromasil | Kromasil | | Supelco | Supelco | |
|---|---|---|---|---|---|---|---|
| | **C4** | **C8** | **C18** | **YMC C4** | **C5** | **C8** | **HP10** |
| 228 | 3516 | 2927 | 2614 | 1833 | 4457 | 4113 | 4110 |

EP 1 600 211 A1

Table 7   (continued)

| Linear Velocity (cm/hr) | Kromasil | Kromasil | Kromasil | | Supelco | Supelco | |
|---|---|---|---|---|---|---|---|
| | C4 | C8 | C18 | YMC C4 | C5 | C8 | HP10 |
| 228 | 3525 | 3006 | 2723 | 1830 | 4319 | 4116 | 4110 |
| 152 | 4648 | 3938 | 3003 | 2387 | 5466 | 5285 | 5586 |
| 152 | 4645 | 3817 | 3010 | 2442 | 5596 | 5429 | 5308 |
| 76 | 7087 | 6048 | 3974 | 3877 | 7809 | 7966 | 7932 |
| 76 | 7081 | 6284 | 3963 | 3868 | 7579 | 8313 | 7442 |
| 38 | 8807 | 8154 | 4617 | 5770 | 10343 | 10518 | 10205 |
| 38 | 8643 | 8169 | 4626 | 5885 | 10214 | 10543 | 10233 |
| 19 | 10202 | 10844 | 5434 | 7488 | 13710 | 10974 | 13516 |
| 19 | 9983 | | 5434 | 7502 | 13850 | 10811 | 13258 |

**Claims**

1. An improved method of making a plurality of macroporous chromatographic resin beads, in which said improvement comprises: removing a solvent from around said beads in a manner not to disturb the internal pore structure of said beads.

2. The method of claim 1 in which said solvent comprises water and in which said removing comprises flash drying said water off said beads.

3. The method of claim 1 in which said removing comprises microwave drying.

4. The method of claim 1 in which said removing comprises spray drying.

5. The method of claim 1 in which said removing comprises freeze drying.

6. A macroporous bead made using a method which utilizes the step of removing a solvent from around said beads in a manner not to disturb the internal pore structure of said beads.

7. An improved method of chromatography, in which said improvement comprises using a plurality of macroporous beads made using a process which utilizes the step of removing a solvent from around said beads in a manner not to disturb the internal pore structure of said beads.

8. The method of claim 7 in which said removing is selected from the group consisting of flashing off said solvent, freeze drying off said solvent and microwaving off said solvent.

9. A biomolecule, pharmaceutical or precusor of a pharmaceutical or biomolecule separated from other compounds using the method of chromatography of claim 7.

10. The method of claim 1 in which said beads are made by seed expansion.

11. The method of claim 8 in which said beads are made by seed expansion.

16

**European Patent**
**Office**

## EUROPEAN SEARCH REPORT

Application Number

EP 05 25 2979

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 037 738 A (KODAK LTD) 16 July 1980 (1980-07-16) * page 2, paragraph 1; claims 11-16; examples 3-6 * ----- | 1-11 | B01J20/26 B01J20/28 |
| X | DE 37 22 102 A1 (ASAHI KOGAKU KOGYO K.K; ASAHI KOGAKU KOGYO K.K., TOKIO/TOKYO, JP) 14 January 1988 (1988-01-14) * column 2, last paragraph; claims 1,3 * ----- | 1-11 | |
| A | EP 1 209 213 A (ROHM AND HAAS COMPANY) 29 May 2002 (2002-05-29) * claims 1,7 * ----- | 1-11 | |

TECHNICAL FIELDS
SEARCHED (Int.Cl.7)

B01J
G01N

The present search report has been drawn up for all claims

| Place of search | Date of completion of the search | Examiner |
|---|---|---|
| The Hague | 5 September 2005 | Gilliquet, J-N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 600 211 A1**

**ANNEX TO THE EUROPEAN SEARCH REPORT
ON EUROPEAN PATENT APPLICATION NO.**

EP 05 25 2979

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2005

| Patent document cited in search report | | Publication date | Patent family member(s) | | Publication date |
|---|---|---|---|---|---|
| GB 2037738 | A | 16-07-1980 | NONE | | |
| DE 3722102 | A1 | 14-01-1988 | JP | 2117051 C | 06-12-1996 |
| | | | JP | 7104332 B | 13-11-1995 |
| | | | JP | 63016044 A | 23-01-1988 |
| | | | SE | 466791 B | 06-04-1992 |
| | | | SE | 8702761 A | 06-01-1988 |
| | | | US | 5441635 A | 15-08-1995 |
| | | | US | RE35340 E | 01-10-1996 |
| | | | US | 6306297 B1 | 23-10-2001 |
| | | | US | 5651882 A | 29-07-1997 |
| | | | US | 5039408 A | 13-08-1991 |
| | | | US | 5651884 A | 29-07-1997 |
| EP 1209213 | A | 29-05-2002 | AU | 9133401 A | 30-05-2002 |
| | | | CN | 1356345 A | 03-07-2002 |
| | | | EP | 1209213 A1 | 29-05-2002 |
| | | | JP | 2002249524 A | 06-09-2002 |
| | | | US | 2002061322 A1 | 23-05-2002 |

EPO FORM P0459

For more details about this annex : see Official Journal of the European Patent Office, No. 12/82